# EUROPÄISCHE PATENTSCHRIFT

(11) **EP 0 492 152 B1**
(45) Veröffentlichungstag und Bekanntmachung des Hinweises auf die Patenterteilung: **14.09.1994**
(21) Anmeldenummer: 91120122.6
(22) Anmeldetag: 26.11.1991
(51) Int. Cl.: B60K 6/04

(54) **Hybridantrieb für Fahrzeuge**
Hybrid propulsion for vehicles
Propulsion hybride pour véhicules

(30) Priorität: 21.12.1990 DE 4041117
(43) Veröffentlichungstag der Anmeldung: 01.07.1992
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Dipl.-Ing. (FH), W-8000 München 40 (DE)

(56) Entgegenhaltungen:
- WO-A-84/03749
- DE-A- 2 917 140
- DE-A- 2 943 519
- DE-A- 2 943 519
- DE-A- 3 525 107
- US-E- 31 500
- US-E- 31 500
- GARAGE + TRANSPORT Nr. 7, 1988, GOLDACH (DE) Seiten 24 - 26; W.H. HUCHO: 'Kombination als Allheilmittel ?'

## Beschreibung

Die Erfindung betrifft einen Hybridantrieb für Fahrzeuge.

Es sind bereits Hybridantriebe unterschiedlichster Art bekannt geworden. So ist beispielsweise in der DE-Fachzeitschrift 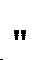 Garage + Transport, 9403 Goldach, Nr. 7/1988, Seiten 24 bis 26" ein Experimentalfahrzeug von VW offenbart, das einen Einwellen-Hybridantrieb besitzt. Letzterer besteht aus einem Verbrennungsmotor und je nachfolgend einer Kupplung, einer gleichzeitig als Schwungscheibe dienenden sowie als Motor bzw. als Generator betreibbaren Elektromaschine, einer weiteren Kupplung und einem herkömmlichen Klauen- bzw. Synchronschaltgetriebe. Hierbei erfolgt die Stillegung der Brennkraftmaschine beim Fahrzeughalt. Ein Anfahren des Fahrzeugs erfolgt mit der motorisch betriebenen Elektromaschine gefolgt von einer späteren Wiederanlassung des Verbrennungsmotors bei weiterer Beschleunigung durch die Schließung der zwischen Verbrennungsmotor und Elektromaschine gegebenen Kupplung. Falls nach dem Anfahren nur eine Weiterfahrt mit geringer Geschwindigkeit bzw. geringem Leistungsbedarf notwendig ist, so wird dies ausschließlich mit der motorisch betriebenen Elektromaschine realisiert, wobei während der Getriebeschaltungen die zweite zwischen Elektromaschine und Getriebe gegebene Kupplung geöffnet wird. Dieser bekannte Hybridantrieb erweist sich jedoch aufgrund seiner Konfiguration insofern als nachteilig, als die Elektromaschine im Antriebsstrag stets verlusterzeugend mitgeschleppt werden muß. Außerdem erschwert die als Teil der Elektromaschine fungierende Schwungscheibe aufgrund ihrer Trägheit die einzelnen Gangschaltungen. Darüber hinaus erscheint der gesamte Hybridantrieb als sehr aufwendige und wegen der Linienanordnung der Aggregate sehr lang bauende Konstruktion, für die in vielen Einsatzfällen kein Einbauraum vorhanden ist.

Alternativ zu diesem Experimentalfahrzeug von VW ist von Audi ein anderes Experimentalfahrzeug, der 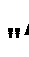 Audi-Duo" bekannt geworden, bei dem der Verbrennungsmotor mit Kupplung und herkömmlichem Klauen- bzw. Synchronschaltgetriebe auf die eine Achse des Fahrzeugs und eine Elektromaschine direkt auf die andere Achse des Fahrzeugswirkt. Auch diese Lösung hat verschiedene Nachteile. Die elektromotorisch angetriebene Achse bewirkt bei abgeschaltetem Elektromotor und Antrieb der anderen Achse über den Verbrennungsmotor ständig Schleppverluste. Dadurch, daß beide Achsen Antriebsachsen sind und daher getriebetechnisch entsprechend ausgelegt werden müssen, ergibt sich ein erhöhter Bauaufwand. Beim rein elektromotorischen Betrieb des Fahrzeugs ergibt sich aufgrund der Charakteristik des verwendeten Elektromotors eine relativ geringe Zugkraft, die aus Sicht praktischer Einsatzfälle kaum befriedigen kann. Außerdem ist keine Bremsenergierückgewinnung während des Brennkraftmaschinenbetriebes bei abgeschaltetem Elektromotor möglich. Schließlich ist auch keine Wiederanlassung der z.B. bei einem Fahrzeughalt abgestellten Verbrennungsmaschine durch die Elektromaschine möglich.

Ein anderes Hybrid-Konzept wird bei der Lösung nach der DE-OS 23 45 018 verfolgt. Der dortige Hybridantrieb eines Fahrzeuges, z.B. Oberleitungsbus, besteht aus einem Wärmemotor und einem Elektromotor, die wahlweise oder gemeinsam über ein Getriebe auf einen Achsantriebsstrang wirken. Als Getriebe ist ein Automatikgetriebe mit einem hydrokinetischen Wandler vorgesehen. Die beiden Motoren sind mit dem Getriebe über eine spezielle Transmissionsvorrichtung kuppelbar, die räumlich vor dem Getriebe angeordnet ist und aus einem mehr oder weniger komplizierten Getriebezug mit Kupplung bzw. Bremseinrichtung besteht. Der Einbau dieser Transmissionseinrichtung in den Bereich zwischen Wärmekraftmaschine und Getriebe führt ersichtlicherweise zu einer relativ langen Bauweise, für die nicht in jedem Fahrzeug Platz vorhanden ist. Außerdem ist mit der besagten Transmission ein relativ hoher Getriebekonstruktionsaufwand verbunden. Des weiteren sind Automatikgetriebe auch nicht für jeden Einsatzfall geeignet, so daß diese Lösung in verschiedenen Fahrzeugen von vornherein ausscheidet.

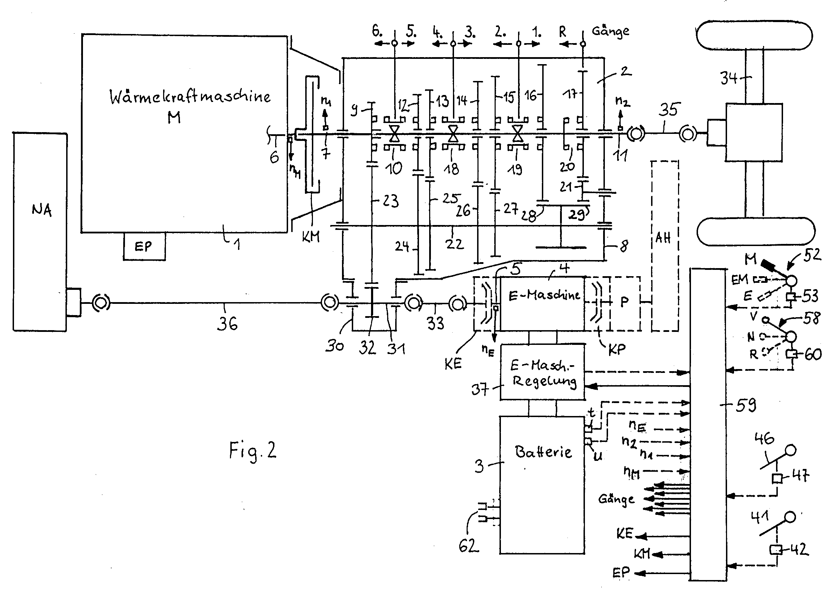

Die Erfindung geht aus von einem Hybridantrieb gemäß der DE 29 43 519 A1, insbesondere der dort in Fig. 2 dargestellten Version. Dort ist der Hybridantrieb durch eine Brennkraftmaschine mit Schwungrad und in Reihe hierzu einer Kupplung, einem Freilauf und einem Schaltgetriebe sowie eine Elektromaschine gebildet. Letztere ist über eine Transmission im Bereich des Freilaufes außerhalb des Getriebes mit dessen Eingangswelle verbunden ist. Was die Funktionsweise dieses Hybridantriebes anbelangt, so gilt hier das gleiche wie eingangs der Beschreibungseinleitung zum Experimentalfahrzeug von VW gesagte.

Dieser Hybridantrieb baut aber nicht auf einem herkömmlichen Antriebsstrang für normale, nur brennkraftmaschinenbetriebene Fahrzeuge auf, bei dem sich an die Brennkraftmaschine die Kupplung und an diese das Synchron- bzw. Klauenschaltgetriebe jeweils unmittelbar anschließt.

Aus der US-RE 31, 500 ist ein Spezialfahrzeug bekannt, das über einen Hauptantriebsstrang mit einem Motor für Straßenfahrt und über einen von einer anderen Stelle des Fahrzeugs aus steuerbaren Hilfsmotor beim Betrieb der Spezialeinrichtungen antreibbar ist. Diese Art von Fahrzeugantrieb ist aber an sich nicht unter den Begriff Hybridantrieb zu rechnen.

Es ist daher Aufgabe der Erfindung, einen Hybridantrieb zu schaffen, der auf einem herkömmlichen Fahrzeug-Antriebsstrang mit Wärmekraftmaschine, Kupplung und Klauen- bzw. Synchronschaltgetriebe basierend mit geringstmöglichem getriebetechnischem Aufwand durch eine Elektromaschine und andere Organe so ergänzt wird, daß ein Fahrbetrieb mit verbesserten Emissions- und Kraftstoffverbrauchswerten und Bremsenergierückgewinnung sowie Ausbaumöglichkeiten im Hinblick zumindest auf eine Teilautomatisierung erreichbar sind.

Diese Aufgabe wird erfindungsgemäß durch einen Hybridantrieb mit der im Anspruch 1 angegebenen Merkmalskombination gelöst.

Vorteilhafte Ausgestaltungen bzw. kombinatorische Weiterbildungen dieser Merkmale sind in den Unteransprüchen angegeben.

Die erfindungsgemäße Lösung zeichnet sich besonders dadurch aus, daß bei der Realisierung des Hybridantriebes auf ein Fahrzeug mit einem herkömmlichen Antriebsstrang bestehend aus einer Wärmekraftmaschine mit Klauen- bzw. Synchronschaltgetriebe und unmittelbar dazwischen angeordneter Kupplung, zurückgegriffen werden kann, wobei zur Realisierung der Transmission, über die die Elektromaschine mit der Eingangswelle des Getriebes verbunden bzw. verbindbar ist, ebenfalls auf ohnehin im Getriebe vorhandene Getriebeglieder zurückgegriffen werden kann und diese lediglich durch einfache und billige externe Transmissions-Teile ergänzt werden müssen. Aufgrund der erfindungsgemäßen Lösung ist somit ein alternativer oder gemeinsamer Antrieb des Fahrzeugs durch die Wärmekraftmaschine und Elektromaschine bestens angepaßt an die verschiedenen Fahrbetriebssituationen realisierbar. Der erfindungsgemäße Hybridantrieb läßt zudem die verschiedensten Ausbaustufen auch im Hinblick auf eine Teilautomatisierung oder vollständige Automatisierung des Fahrbetriebes zu. So ist es bei einer Teilautomatisierung denkbar, daß im Fahrzeug auf das bisherige Kupplungspedal und die zugehörige Hebelage verzichtet werden kann für den Fall, daß der Kupplung ein entsprechendes elektro-hydraulisches bzw. elektro-pneumatisches Schaltorgan zugeordnet wird, das den Befehlen einer dann vorzusehenden Steuereinrichtung gehorcht. Ebenso kann in dieser und einer weiteren Ausbaustufe auch auf den herkömmlichen Gangschalthebel und die zugehörige Hebelage verzichtet werden. Die einzelnen Gänge des Getriebes werden dann über elektro-hydraulische oder elektro-pneumatische Stellorgane geschaltet, deren Betätigung ebenfalls von der besagten Steuereinrichtung ausgelöst wird. Anstelle des herkömmlichen Gangschalthebels kann dann ein einfaches Vorwahlorgan mit Stellungen für Vorwärtsbetrieb, Neutral und Rückwärtsbetrieb verwendet werden. Auf diese Weise läßt sich mit verhältnismäßig einfachen Mitteln und geringem Kostenaufwand ein Fahrzeug mit Hybridantrieb schaffen, das höchsten Anforderungen genügt. Im Stadtbetrieb oder in Zonen mit hohem Fußgängeranteil läßt sich das Fahrzeug allein über den Elektromotor betreiben, die Zuschaltung der Wärmekraftmaschine ist durch Anlassung derselben über den Elektromotor jederzeit möglich. In weniger emissionsgefährdeten Gebieten, z.B. auf Landstraßen und Autobahnen, ist das Fahrzeug allein mit der Wärmekraftmaschiene betreibbar. Bei Bremsungen wird die anfallende Bremsenergie grundsätzlich über die dann als Generator arbeitende Elektromaschine in elektrische Energie umgewandelt, die in der Batterie abgespeichert wird. Die Synchronisierung der Gänge bei den Schaltungen wird über die entsprechend im Plus-Minus-Verfahren drehzahlgeregelte Elektromaschine bewerkstelligt.

Falls es sich bei dem Fahrzeug beispielsweise um ein Müllsammelfahrzeug, einen Kipperlastwagen, einen Lkw mit Hubplattform, ein Feuerwehrfahrzeug mit ausfahrbarer Leiter usw.also ein Fahrzeug handelt, das eine Arbeitshydraulik mit zugehörigem Pumpenaggregat aufweist, läßt sich letzteres über eine schaltbare Kupplung an der Elektromaschine anschließen, so daß die diesbezüglich notwendige Leistung in der Regel von der Elektromaschine erbringbar ist, dies entweder bei abgeschalteter oder nur im Leerlauf bzw. unteren Lastbereich betriebener Wärmekraftmaschine.

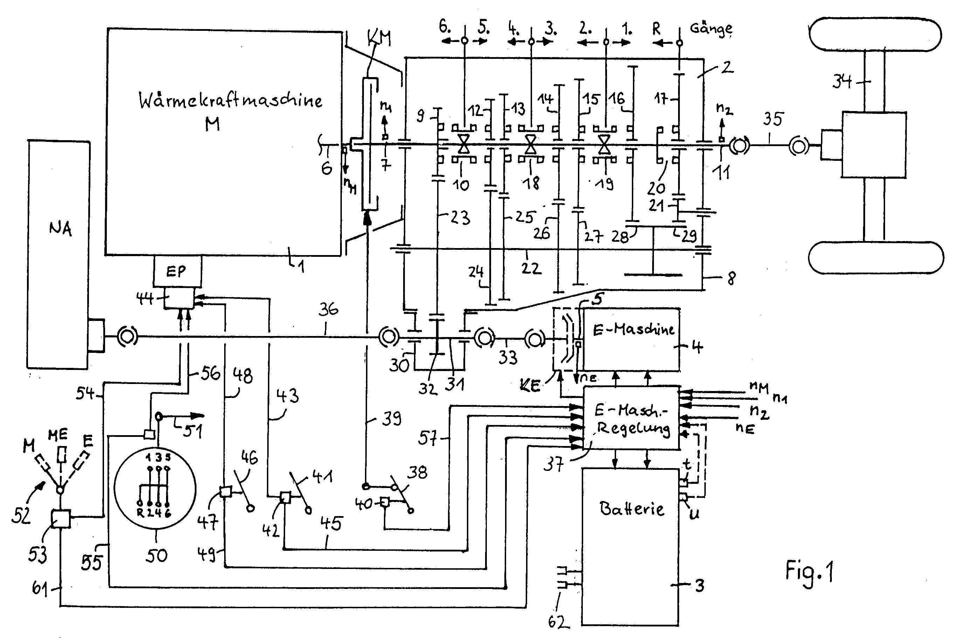

Weitere Vorteile der erfindungsgemäßen Lösung ergeben sich aus dem Inhalt der nachfolgenden Beschreibung. Nachstehend ist die Erfindung anhand dreier in Fig. 1 bis 3 der Zeichnung dargestellter Ausführungsbeispiele noch näher erläutert. In den Figuren sind des besseren Verständnisses wegen gleiche bzw. einander entsprechende Teile mit gleichem Bezugszeichen angezogen.

Der Hybridantrieb ist bei den verschiedensten Fahrzeugen anwendbar, wie in Personenkraftwagen, Lastkraftwagen, Omnibussen, gepanzerten Fahrzeugen, Kommunalfahrzeugen und dergleichen.

Der Hybridantrieb besteht in der Kombination eines herkömmlichen Antriebsstranges, umfassend eine Wärmekraftmaschine 1 mit Klauen- bzw. Synchronschaltgetriebe 2 und dazwischen angeordneter Kupplung KM, mit einer alternativ zur oder gemeinsam mit der Wärmekraftmaschine 1 betreibbaren, im Generatorbetrieb eine Batterie 3 speisenden oder als Motor arbeitenden Elektromaschine 4, deren Welle 5 über eine Transmission, die zum Teil durch intern des Getriebes 2 ohnehin gegebene Getriebeteile, zum anderen Teil durch außerhalb des Getriebes 2 gegebene Teile gebildet ist, mit der Eingangswelle 7 des Getriebes 2 zumindest in bestimmten Betriebsbereichen des Hybridantriebes bzw. Fahrbetriebsverhältnissen verbunden ist. Wärmekraftmaschine 1, Kupplung KM und Getriebe 2 sind unmittelbar ohne Zwischenschaltung weiterer Teile in Reihe zusammengebaut.

Bei der Wärmekraftmaschine 1 kann es sich um einen Diesel- oder Ottomotor, einen Heißgas- oder Stirlingmotor, eine Gasturbine oder dergleichen handeln. Das Klauen- bzw. Synchronschaltgetriebe 2 (nachfolgend nur Getriebe genannt) hat den für eine solche Getriebeart üblichen Aufbau, der jedoch je nach Anzahl der zu schaltenden Gänge unterschiedlich sein kann. Für Pkw's beispielsweise kommen regelmäßig Getriebe mit vier, fünf oder sechs Vorwärtsgängen und einem Rückwärtsgang (dieser Fall ist in der Zeichnung dargestellt) zur Anwendung, während bei Nutzfahrzeugen in der Regel Getriebe mit einer höheren Anzahl von schaltbaren Gängen, auch solche mit Splitgangschaltungen zur Anwendung kommen.

Die Kupplung KM ist einerseits mit der Welle 6 der Wärmekraftmaschine 1, andererseits mit der Eingangswelle 7 des Getriebes 2 verbunden. Auf der in das Gehäuse 8 des Getriebes hineinführenden Eingangswelle 7 sitzt ein Ritzel 9, das vorzugsweise der Übersetzung des höchsten schaltbaren Ganges (6. Gang) zugehört und über eine schaltbare Synchronklauenkupplung 10 mit der zur Eingangswelle 7 axial fluchtenden Ausgangswelle 11 des Getriebes 2 in bzw. außer Wirkverbindung bringbar ist. Auf der Ausgangswelle 11 sind innerhalb des Gehäuses 8 jeweils frei drehbar die den Übersetzungen der restlichen Gänge (1. bis 5. Gang) einschließlich eines Rückwärtsganges (R) zugehörigen Ritzel 12, 13, 14, 15, 16, 17 angeordnet, die ebenfalls über die Synchronklauenkupplung 10 bzw. weitere schaltbare Synchronklauenkupplungen 18, 19, 20 in bzw.außer Wirkverbindung mit der Ausgangswelle 11 bringbar sind. Jedes der Ritzel 9 und 12 bis 16, jenes (17) für den Rückwärtsgang über ein weiteres Untersetzungsritzel 21, kämmt mit einem die jeweilige Übersetzung im jeweiligen Gang festlegenden, auf einer achsparallelen Nebenwelle 22 des Getriebes 2 sitzenden Ritzel 23 (mit 9), 24 (mit 12), 25 (mit 13), 26 (mit 14), 27 (mit 15), 28 (mit 16) und 29 (über 21 mit 17). An der Ausgangswelle 11 des Getriebes 2 ist ein zur anzutreibenden Achse 34 des Fahrzeugsführender Triebwellenstrang 35 angeschlossen.

Die Transmission zwischen Elektromaschine 4 und Eingangswelle 7 des Getriebes 2 ist vorzugsweise über das auf der Eingangswelle 7 sitzende Ritzel 9 und das mit diesem kämmende, auf der Nebenwelle 22 sitzende Ritzel 23 und des weiteren über wenigstens ein weiteres, außerhalb des Getriebes 2 in einem am Gehäuse 8 des letzteren angeflanschten Gehäuse 30 auf einer darin gelagerten Achse 31 sitzendes Ritzel 32 sowie eine mit der Achse 31 und der Elektromaschinenwelle 5 verbundene Triebwelle 33 hergestellt. Falls andere Übersetzungsverhältnisse notwendig sind, können anstelle des einzigen Ritzels 32 auch zwei oder mehrere miteinander kämmende Ritzel die Verbindung zwischen Triebwelle 33 und getriebeinternem Ritzel 23 herstellen. Falls die Elektromaschine anders als in der Zeichnung dargestellt angeordnet ist, kann die Verbindung zwischen der Triebwelle 33 und dem getriebeinternen Ritzel 23 beispielsweise auch über einen Winkeltrieb oder dergleichen hergestellt werden. In den Triebstrang 33 zwischen Elektromaschine 4 und Getriebe 2 ist eine schaltbare Kupplung KE und/oder ein torsionsdämpfendes Glied und/oder eine momentenbegrenzende Kupplung eingebaut.

Die bzw. zumindestens ein Teil der in der Zeichnung insgesamt mit NA bezeichneten Nebenaggregate des Fahrzeugs, wie Lüfter, Luftpresser, Hydraulikpumpen und dergleichen sind über einen an der Achse 31 des außerhalb des Getriebes 2 gegebenen Ritzels 32 angeschlossenen Triebstrang 36 und damit sowohl von der Wärmekraftmaschine 1 und/oder der Elektromaschine 4 her mechanisch (wie dargestellt) oder alternativ hydrostatisch antreibbar.

Mit 37 ist eine Regeleinrichtung bezeichnet, die den Betrieb der Elektromaschine 4 hinsichtlich Abschalten und Anlassen sowie Drehzahleinstellung für Motor- und Generatorbetrieb und insbesondere auch für eine Synchronisierung des Getriebes 2 während der Gangschaltung und aufgrund der vom Fahrer mit Fahrpedal und Bremspedal ausgelösten Vorgaben entsprechend regelt.

In Fig. 1 ist die Erfindung in einer Ausbaustufe gezeigt, die im Vergleich zu einem herkömmlichen Fahrzeug einen geringstmöglichen Umbauaufwand desselben zum Erhalt eines Fahrzeugs mit dem erfindungsgemäßen Hybridantrieb erfordert. Mit 38 ist ein Kupplungspedal bezeichnet, bei dessen Betätigung die Kupplung KM über ein Gestänge 39 betätigbar und von einem Sensor 40 über Leitung 57 der Regeleinrichtung 37 ein entsprechendes Signal zuführbar ist. Mit 41 ist ein Fahrpedal bezeichnet, dessen Betätigung von einem Sensor 42 erfaßt und als elektrisches Signal über Leitung 43 einer vorzugsweise elektronischen Betriebsregeleinrichtung 44 der Wärmekraftmaschine 1 sowie über Leitung 45 der Regeleinrichtung 37 zugeführt wird. Mit 46 ist ein Bremspedal bezeichnet, bei dessen von einem Sensor 47 erfaßter Betätigung ein entsprechendes Signal über Leitung 48 der Betriebssteuereinrichtung 44 und über eine Leitung 49 der Regeleinrichtung 37 zugeführt wird. Mit 50 ist der Gangschalthebel bezeichnet, mit dem über ein Gestänge 51 die einzelnen Gänge des Getriebes 2 schaltbar sind. Zur Erfassung jeder Gangschaltung ist dem Gangschalthebel 50 ein Schaltsignalgeber 54 zugeordnet, der die jeweilige Schalthebelbetätigung in ein repräsentatives elektrisches Signal umsetzt, welches über Leitung 55 der Regeleinrichtung 37 und über Leitung 56 der Betriebssteuereinrichtung 44 zugeführt wird. Mit 52 ist ein. Betriebsartenwahlschalter bezeichnet, der drei Stellungen einnehmen kann, nämlich M = Wärmekraftmaschinenbetrieb, ME = Wärmekraftmaschinen- und Elektromaschinenbetrieb, E = Elektromaschinenbetrieb, welche Einstellungen von einem Stellungsgeber 53 über Leitung 54 der Betriebssteuereinrichtung 44 und über Leitung 61 der Regeleinrichtung 37 signalisiert werden. Die Regeleinrichtung erhält außerdem Signale n_{M} (= Wärmekraftmaschinendrehzahl), n₁ (= Drehzahl Eingangswelle 7), n₂ (= Drehzahl Ausgangswelle 11), n_{E} (= Drehzahl Elektromaschinenwelle 5), U (= Spannung Batterie 3), t (Gasungstemperatur Batterie 3). Außerdem übernimmt die Regeleinrichtung 37 das Betätigen der Kupplung KE.

Aufgrund dieser Einrichtungen lassen sich folgende Betriebsweisen des Fahrzeugsrealisieren:
1. Betriebsartenwahlschalter 52 in Stellung M: Nur die Wärmekraftmaschine 1 sorgt für einen Vortrieb des Fahrzeugs, welche Betriebsart vorzugsweise außerhalb von Ortschaften, auf Landstraßen und Autobahnen bzw. in nicht bzw. weniger emissionsgefährdeten Gebieten anzuwenden ist. Die Elektromaschine 4 wird dabei, solang ein Laden der Batterie 3 erforderlich ist, über den Getriebezug 7,9,23,32,31,33, als Generator betrieben, dann abgeschaltet und durch Öffnung der Kupplung KE von besagtem Antriebsstrang getrennt.
2. Betriebsartenwahlschalter 52 in Stellung ME: Die Wärmekraftmaschine 1 und die als Motor betriebene Elektromaschine 4 sorgen gemeinsam für einen Vortrieb des Fahrzeugs, welche Betriebsart insbesondere zum Anfahren und Beschleunigen unter erschwerten Bedingungen, z.B. am Berg oder in schwierigem Gelände, anzuwenden ist.
3. Betriebsartenwahlschalter 52 in Stellung E: Die als Motor betriebene Elektromaschine 4 sorgt allein für den Vortrieb des Fahrzeugs. Diese Betriebsart ist insbesondere in innerörtlichen, emissionsgefährdeten Bereichen anzuwenden.

In allen Stellungen des Betriebsartenwahlschalters 52 wird die Elektromaschine 4 außerdem bei jedem Schaltvorgang des Getriebes 2 von der Regeleinrichtung 37 im Plus/Minus-Verfahren derart drehzahlgeregelt, daß im Getriebe 2 eine Synchronisierung zwischen Eingangs; und Ausgangswelle 7 bzw. 11 im Sinne kürzestmöglicher Gangwechsel erfolgt. Darüber hinaus wird unabhängig von der Stellung des Betriebsartenwahlschalters 52 beim Bremsen des Fahrzeuges die Elektromaschine 4 als Generator geschaltet betrieben, um die über das Getriebe 2 und den Triebstrang 32, 31, 33 zugeführte Bremsenergie in Ladeenergie für die Batterie 3 umzusetzen.

Der Fahrer hat mithin bei der vorbeschriebenen Lösung gemäß Fig. 1 die volle Befehlsgewalt über die jeweilige Betriebsart M, ME oder E. Diese Befehlsgewalt ist ihm auch bei der Lösung gemäß Fig. 2 an die Hand gegeben, jedoch stellt diese Ausführungsvariante eine höhere Ausbaustufe für teilautomatisiertem Betrieb des Hybridantriebes dar. In dieser Ausführungsform entfallen gegenüber der Lösung gemäß Fig. 1 das Kupplungspedal 38 samt zugehörigem Gestänge 39, Sensor 40 und Leitung 57 sowie der herkömmliche Schalthebel 50 samt zugehörigem Gestänge 51, Sensor 54 und Leitungen 55, 56. Der Ganghebel 50 ist ersetzt durch ein Vorwahlorgan 58, das vom Fahrer in die Stellungen V für Vorwärtsfahrt, N für Neutralstellung und R für Rückwartsfahrt gebracht werden kann. Zur Betriebssteuerung des Fahrzeugs ist in diesem Fall ein fahrzeuginterner Bordcomputer 59 vorgesehen, der die Einrichtung 44 gemäß Fig. 1 ersetzt und den üblichen Aufbau mit Ein- und Ausgabeeinheiten, Daten- und Programmspeichern sowie Microprozessor aufweist. In den Datenspeichern des Bordcomputers 59 sind Kennfelddaten der Wärmekraftmaschine 1 sowie Betriebsdaten der Elektromaschine 4 sowohl für Motor als auch Generatorbetrieb eingespeichert. Dem Bordcomputer 59 werden eine Reihe von Ist-Werten zur programmäßigen Verarbeitung zugeführt, von denen nur die im vorliegenden Fall interessierenden näher dargestellt sind. Es sind dies die Drehzahlen n_{M} der Wärmekraftmaschinenwelle 6, die Drehzahl n₁ der Getriebeeingangswelle 7, die Drehzahl n₂ der Getriebeausgangswelle 11, die Drehzahl n_{E} der Elektromaschinenwelle 5 und ein Rückmeldesignal von der Regeleinrichtung 37. Aufgrund der programmäßigen Verarbeitung dieser Ist-Zustände im Vergleich mit den eingespeicherten Daten werden vom Bordcomputer 59 entsprechende Signale an die angeschlossenen Aggregate ausgegeben, nämlich EP für die Wärmekraftmaschinen-Steuerung, KM für die elektrohydraulische oder elektropneumatische Betätigung der Kupplung KM, KE für die elektrische oder elektro-pneumatische oder elektro-hydraulische Betätigung der Kupplung KE, ferner Signale für die Schaltung der einzelnen Gänge des Getriebes 2 mittels elektrohydraulischer oder elektropneumatischer Stellorgane, sowie für den Betrieb der Regeleinrichtung 37, welch letztere in diesem Fall ausschließlich für die Drehzahlregelung der Elektromaschine 4 sowie für den Lade- und Entladebetrieb der Batterie 3 dient. Der Bordcomputer 59 erhält außerdem vom Sensor 42 die Betätigung und Stellung des Fahrpedals 41, vom Sensor 47 die Betätigung des Bremspedals 46, von einem Stellungsgeber 60 die Einstellung des Vorwahlschalters 58 und vom Stellungsgeber 53 die Einstellung des Betriebsartenwahlschalters 52 signalisiert.

Aus Sicht des Fahrers bedeutet die Lösung gemäß Fig. 2, daß für ihn das Schalten der Kupplung KM und das Schalten der Gänge des Getriebes 2 hinfällig wird, denn die Betätigung dieser Organe sowie der Kupplung KE wird vom Bordcomputer 59 aus gesteuert. Der Fahrer hat im Fall gemäß Fig. 2 lediglich die Fahrtrichtung mit dem Vorwahlschalter 52 vorzuwählen, den Betriebsartenwahlschalter 58 in entsprechende Stellung zu bringen und dann den Fahrbetrieb über das Fahrpedal 41 und das Bremspedal 46 vorzusteuern. Die Regelung des Fahrbetriebes übernimmt der Bordcomputer 59 durch Ausgabe entsprechender Befehle an die Wärmekraftmaschine 1, die Elektromaschine 4 sowohl für Motor- als auch Generatorbetrieb über die Regeleinrichtung 37, die Stellorgane der Kupplungen KE und KM sowie die Stellorgane zur Schaltung der Gänge des Getriebes 2. Aufgrund der programmäßigen Steuerung durch den Bordcomputer 59 ergib sich ersichtlicherweise gegenüber der Lösung von Fig. 1 eine wesentlich besser auf den Fahrbetrieb und dessen jeweiligen Erfordernisse abgestimmte Einflußnahme auf die einzelnen Komponenten des Hybridantriebes. Die Funktionsweise der Wärmekraftmaschine 1 und/oder der Elektromaschine 4 in den einzelnen vorgewählten Stellungen M, ME, E des Betriebsartenwahlschalters 52 ist in diesem Zusammenhang gleich wie in Verbindung mit Fig. 1 bereits beschrieben.

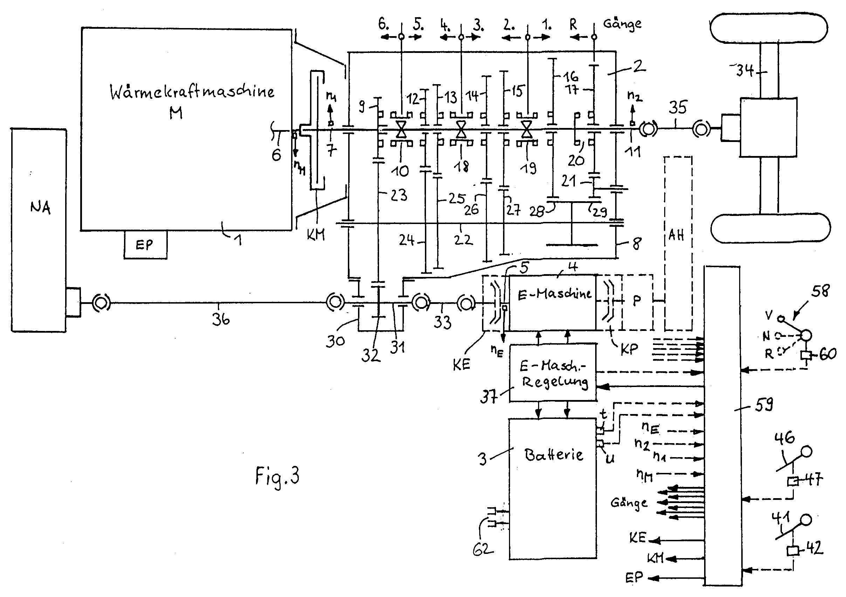

In Fig. 3 ist die höchste Ausbaustufe des erfindungsgemäßen Hybridantriebs-Systems dargestellt. Im Vergleich zur Ausbaustufe gemäß Fig. 2 entfällt hierbei auch die Vorwahlnotwendigkeit des Fahrers hinsichtlich der Betriebsarten M, EM, E und damit der diesbezügliche Betriebsartenwahlschalter 52. Das Betriebsmanagement der Wärmekraftmaschine 1 und der Elektromaschine 4 sowohl im Motor als auch im Generatorbetrieb, der Kupplungen KE und KM sowie der Schaltung der Gänge des Getriebes 2 erfolgt vollautomatisch in bestmöglicher Abstimmung aufeinander durch den Bordcomputer 59, der aufgrund dieses höchstmöglichen Automatisierungsgrades mit einer größeren Anzahl von Daten und auch entsprechend anderen Rechenprogammen als jener gemäß Fig. 2 ausgestattet ist. Der Fahrer hat in diesem Fall nur noch die Vorwahlmöglichkeitder Fahrtrichtung mittels des Vorwahlschalters 58 und eine Einflußnahmemöglichkeit auf den Fahrbetrieb über das Fahrpedal 41 und das Bremspedal 46, das weitere regelt der Bordcomputer 59 im Sinne eines fahrsituationsspezifischen Wechselspiels zwischen Wärmemaschinenbetrieb und/oder Elektromaschinenbetrieb, Getriebe- und Kupplungsschaltungen, Nutzbremsung mit Bremsenergierückgewinnung, Maschinenabschaltung und -wiederanlassung (Wärmekraftmaschinenanwerfen über motorisch betriebene Elektromaschine 4) sowie Ladung der Batterie 3 auch im Wärmekraftmaschinenbetrieb mit im Ergebnis minimalen Emissions- oder Verbrauchswerten seitens der Wärmekraftmaschine 1.

Aufgrund dieses extrem hohen Automatisierungsgrades ist es auch erforderlich, daß der Bordcomputer 59 gemäß Fig. 3 mit einer größeren Anzahl unterschiedlichster Ist-Wert-Daten gespeist wird, die ihm einen besseren Rückschluß auf den Betrieb der Wärmekraftmaschine 1 und den erforderlichen Leistungsbedarf am Antriebsstrang des Fahrzeugs ermöglichen.

Aufgrund der ihm zugeführten Daten initiiert der Bordcomputer einen gemeinsamen Betrieb der Wärmekraftmaschine 1 und der Elektromaschine 4 als Motor in unteren Getriebegängen dann, wenn dies zum Anfahren und Beschleunigen oder zur Langsamfahrt in schwierigem Gelände notwendig ist. Ein Wechsel auf alleinigen motorischen Betrieb der Elektromaschine 4 ebenfalls in unteren Gängen des Getriebes 2 wird bei Erreichen einer bestimmten unteren Fahrgeschwindigkeitsschwelle initiiert und bleibt bis zu einer bestimmten festgelegten oberen Geschwindigkeitsschwelle aufrecht erhalten. Dieser Geschwindigkeitsbereich ist ein Indiz für einen Fahrbetrieb in innerörtlichen bzw. emissionsgefährdeten Bereichen. Bei Überschreiten der besagten oberen Fahrgeschwindigkeitsschwelle wird ein Wechsel in den ausschließlichen Betrieb der Wärmekraftmaschine 1 initiiert, wobei das Anwerfen der Wärmekraftmaschine 1 über die Elektromaschine 4 erfolgt, welche nach erfolgter und als erfolgreich erkannter Anlassung abgeschaltet wird. Das Abschalten der Elektromaschine 4 unterbleibt jedoch, wenn ein Laden der Batterie 3 notwendig ist. In diesem Fall wird die Elektromaschine als Generator geschaltet und von der Wärmekraftmaschine 1 her über die besagte Transmission angetrieben. Der Betrieb der Elektromaschine 4 als Generator von der Wärmekraftmaschine 1 her erfolgt grundsätzlich immer dann, wenn dem Bordcomputer 59 ein Absinken der Batteriespannung unter einen zulässigen Grenzwert signalisiert wird. Außerdem wird die Gasungstemperatur t der Batterie 3 als Regelungskriterium herangezogen. Ein Generatorbetrieb der Elektromaschine 4 wird außerdem bei jedem Bremsvorgang ausgelöst, um die anfallende Bremsenergie in eine entsprechende Ladung der Batterie 3 umzusetzen. Zur Synchronisierung der Schaltung der einzelnen Gänge wird zunächst ein Öffnen der Kupplung KM initiiert, dann durch entsprechende Regelung der Elektromaschinen-Drehzahl Synchronität zwischen Eingangs- und Ausgangswelle 7 bzw. 11 des Getriebes 2 hergestellt, dann bei Synchronität kurzzeitig die Kupplung KE geöffnet bzw. die Elektromaschine 4 kurzzeitig abgeschaltet. Auf diese Weise läßt sich eine Gangschlatung mit einer extrem kurzen Zugkraftunterbrechung realisieren.

In den Ausführungsbeispielen gemäß Fig. 2 und 3 ist die dortige Hybridantriebseinrichtung in Verbindung mit einem Müllsammelfahrzeug, Kipper-Lastkraftwagen, Lastkraftwagen mit Hubplattform, Feuerwehrfahrzeug mit ausfahrbarer Leiter usw., also einem Fahrzeug dargestellt, das eine Arbeitshydraulik AH mit zugehörigem Pumpenaggregat P für Heben, Senken, Pressen und dergleichen aufweist. Diese Aggregate AH, P sind in der Zeichnung gestrichelt eingezeichnet. Es erweist sich in Verbindung mit der restlichen Hybrideinrichtung als besonders vorteilhaft, daß in einem solchen Einsatzfall das Pumpenaggregat P über eine schaltbare Kupplung KP mit der Elektromaschine 4 verbindbar ist. Dies erlaubt einen Betrieb der Arbeitshydraulik AH in vielen Fällen ausschließlich durch Leistungsabgabe der Elektromaschine 4 bei entkuppelter, ganz abgeschalteter oder nur im Leerlauf bzw. unteren Lastbereich betriebener Wärmekraftmaschine 1. Die Wärmekraftmaschine 1 wird jedoch nur solang zur Unterstützung der Elektromaschine 4 herangezogen, als dies für den Betrieb der Arbeitshydraulik AH erforderlich ist. Rein statistisch gesehen ergibt sich somit jedenfalls eine erhebliche Reduzierung der Abgasemissionen gegenüber rein wärmekraftmaschinenmäßig angetriebener Arbeitshydraulik.

Wie aus den Fig. 1 bis 3 ersichtlich, besteht über eine fahrzeugseitige und mit der Batterie 3 verbundene Steckdose 62 die Möglichkeit, die Batterie 3 des Fahrzeugs aus dem öffentlichen Stromnetz über eine geeignete Ladeeinrichtung aufzuladen, so daß auch nach einem längeren Fahrzeughalt bzw.einer längeren Abstellpause die Batterie 3 einen für den anfänglichen Betrieb der Elektromaschine 4 ausreichenden Ladezustand hat.

Generell trägt die erfindungsgemäße Hybridantriebseinrichtung aufgrund des möglichen reinen Elektromaschinenbetriebes des Fahrzeuges in erheblichem Maße zur Reduzierung der Umweltbelastung aufgrund entsprechender Kraftstoffverbrauchsreduzierung und Schadstoffemissionsreduzierung der Wärmekraftmaschine 1 bei.

## Patentansprüche

1. Hybridantrieb für Fahrzeuge, mit einem Antriebsstrang umfassend eine Wärmekraftmaschine (1), ein Klauen- bzw. Synchronschaltgetriebe (2) und dazwischen eine Kupplung (KM), und mit einer alternativ zur oder gemeinsam mit der Wärmekraftmaschine (1) betreibbaren, im Generatorbetrieb eine Batterie speisenden oder als Motor arbeitenden Elektromaschine (4), deren Welle(5) über eine Transmission mit der Eingangswelle (7) des Getriebes (2) zumindest in bestimmten Betriebsbereichen verbunden ist, dadurch gekennzeichnet, daß als Antriebsstrang ein solcher herkömmlicher Bauart vorgesehen ist, bei dem zwischen Wärmekraftmaschine (1) und Getriebe (2) unmittelbar nur die Kupplung (KM) angeordnet ist, und daß die Transmission zwischen Elektromaschine (4) und Eingangswelle (7) des Getriebes (2) über ein intern des letzteren auf der Eingangswelle (7) sitzendes Ritzel (9), ein mit diesem kämmendes, auf einer Nebenwelle (22) des Getriebes (2) sitzendes Ritzel (23) und wenigstens ein weiteres außerhalb des Getriebes (2) in einem angeflanschten Gehäuse (30) auf einer darin gelagerten Achse (31) sitzenden Ritzel (32) sowie über einen an der Achse (31) angeschlossenen und mit der Elektromaschinen-Welle (5) verbundenen Triebstrang (33) hergestellt ist.

2. Hybridantrieb nach Anspruch 1, gekennzeichnet durch die Zuordnung einer Regeleinrichtung (37), welche letztere den Betrieb der Elektromaschine (4) hinsichtlich Abschalten und Anlassen und Drehzahleinstellung für Motor- und Generatorbetrieb sowie für Synchronisierung des Getriebes (2) während der Gangschaltung und aufgrund der fahrerseitigen Vorgaben hinsichtlich Fahrpedal- und Bremspedalbetätigung entsprechend regelt.

3. Hybridantrieb nach Anspruch 1, dadurch gekennzeichnet, daß das auf der Eingangswelle (7) des Getriebes (2) sitzende Ritzel (9) vorzugsweise zur Bildung der Übersetzung des höchsten schaltbaren Ganges dient und über eine schaltbare Synchronklauenkupplung (10) mit einer zur Eingangswelle (7) axial fluchtenden Ausgangswelle (11) des Getriebes (2) in bzw.außer Wirkverbindung bringbar ist, wobei auf der Ausgangswelle (11)jeweils frei drehbar die den Übersetzungen der restlichen Gänge einschließlich des Rückwärtsganges zugehörigen Ritzel (12, 13, 14, 15, 16, 17) angeordnet sind, die ebenfalls über schaltbare Synchronklauenkupplungen (10, 18, 19, 20) in bzw. außer Wirkverbindung mit der Ausgangswelle (11) bringbar sind, und wobei jedes der Ritzel (9, 12, 13, 14, 15, 16, 17), jenes (17) für den Rückwärtsgang (R) gegebenenfalls über ein weiteres Untersetzungsritzel (21), mit einem die jeweilige Übersetzung im jeweiligen Gang festlegenden, auf der achsparallelen Nebenwelle (22) des Getriebes (2) sitzenden Ritzel (23, 24, 25, 26, 27, 28, 29) kämmt.

4. Hybridantrieb nach Anspruch 1, dadurch gekennzeichnet, daß zumindest ein Teil der Nebenaggregate (NA) des Fahrzeugs, wie Lüfter, Luftpresser, Hydraulikpumpen und dergleichen über einem an der Achse (31) des außerhalb des Getriebes (2) gegebenen Ritzels (32) angeschlossenen Triebstrang (36), somit von der Wärmekraftmaschine (1) und/oder der Elektromaschine (4) her antreibbar sind.

5. Hybridantrieb nach Anspruch 1, dadurch gekennzeichnet, daß in den Triebstrang (33) zwischen Elektromaschine (4) und Getriebe (2) eine schaltbare Kupplung (KE) und/oder ein torsionsdämpfendes Glied und/oder eine momentenbegrenzende Kupplung eingebaut ist.

6. Hybridantrieb nach Anspruch 1, dadurch gekennzeichnet, daß im Falle dessen Einsatz in einem Fahrzeug wie Müllsammelfahrzeug, Kipper-Lastwagen, Verteiler-Lkw mit Hubplattform, Feuerwehrfahrzeug mit ausfahrbarer Leiter usw., das eine Arbeitshydraulik (AH) mit zugehörigem Pumpenaggregat (P) für Heben, Senken, Pressen und dergleichen aufweist, das Pumpenaggregat (P) über eine schaltbare Kupplung (KP) mit der Elektromaschine (4) verbindbar ist.

7. Hybridantrieb nach den Ansprüchen 1 und 2, gekennzeichnet durch die Zuordnung einer systemeigenen elektronischen Betriebssteuereinrichtung (59), die per Programm durch Vergleich von erfaßten Istwerten mit eingespeicherten Sollwerten/Kennfelddaten und auf Vorgaben des Fahrers durch Betätigung von Fahrpedal (41), Bremspedal (46) sowie Einstellung anderer Wahlorgane (58) hin den Betrieb der Wärmekraftmaschine (1) und der Elektromaschine (4) - letztere über die Regeleinrichtung (37) - regelt, für teilautomatisierten Betrieb zumindest auch das Schalten der Kupplung (KM) und - soweit vorhanden (KE) -, für vollautomatischen Betrieb auch das Schalten der Gänge über elektropneumatische bzw. elektrohydraulische Schaltorgane steuert, insbesondere in dem Sinne, daß die Elektromaschine (4) im niedrigen Geschwindigkeitsbereich bzw. bis zu einerdiesbezüglich vorgegebenen Geschwindigkeitsgrenze als Motor allein oder zusammen mit der Wärmekraftmaschine (1) wirkt.

## Claims

1. Hybrid drive for vehicles with a power train comprising a heat engine (1), a constant mesh or synchromesh gearbox (2) and a clutch (KM) in between, and with an electric machine (4) which can be operated alternatively to or together with the heat engine (1) and which supplies a battery when being operated as a generator or which works as a motor, the shaft (5) of which electric machine (4) is, at least in certain operating areas, connected with the input shaft (7) of the gearbox (2) via a transmission, characterised in that as the power train one of conventional design is fitted, in which only the clutch (KM) is arranged between the heat engine (1) and the gearbox (2) and that the transmission between the electric machine (4) and the input shaft (7) of the gearbox (2) is established via a pinion (9) sitting on the input shaft (7) inside the said gearbox (2), a pinion (23) sitting on a countershaft (22) of the gearbox (2) engaging with the said pinion (9), and at least one more pinion (32) located outside the gearbox (2) and sitting on a shaft (31) running on bearings in a flanged-on housing (30) as well as via a power train (33) connected to the axle (31) and the shaft (5) of the electric machine.

2. Hybrid drive as under Claim 1, characterised in that a control unit (37) is allocated which, during gearshifting operations and on the basis of the driver's actuation of the accelerator and brake pedals, correspondingly controls the operation of the electric machine (4) with regard to the switching off and on and to the speed adjustment for motor and generator operation as well as to the synchronisation of the gearbox (2).

3. Hybrid drive as under Claim 1, characterised in that the pinion (9) sitting on the input shaft (7) of the gearbox (2) is preferably used for establishing the transmission for the highest shiftable gear and that the said pinion (9) can be effectively connected with and disconnected from an output shaft (11) of the gearbox (2), which output shaft (11) is axially aligned with the input shaft (7) via a shiftable synchronous dog clutch (10), freely movable pinions (12, 13, 14, 15, 16, 17) sitting on the output shaft (11) and being allocated to the transmissions of the remaining gears including the reverse gear, which pinions (12, 13, 14, 15, 16, 17) can, likewise via shiftable synchronous dog clutches (10, 18, 19, 20), be effectively connected with and disconnected from the output shaft (11), each of the pinions (9, 12, 13, 14, 15, 16, 17) engaging - pinion (17) for the reverse gear via another reduction pinion (21) if necessary - with a pinion (23, 24, 25, 26, 27, 28, 29) sitting on the parallel countershaft (22) of the gearbox (2) and determining the transmission ratio in the relevant gear.

4. Hybrid drive as under Claim 1, characterised in that at least some of the vehicle's secondary units (NA) such as the fan, air compressor, hydraulic pumps etc, can be driven from the heat engine (1) and/or the electric machine (4) via a power train (36) connected to the shaft (31) of the pinion (32) located outside the gearbox (2).

5. Hybrid drive as under Claim 1, characterised in that a clutch (KE) and/or a torsion-damping element and/or a moment-limiting clutch is/are installed in the power train (33) between the electric machine (4) and the gearbox (2).

6. Hybrid drive as under Claim 1, characterised in that, if the said hybrid drive is used in a vehicle such as a refuse collection vehicle, tipper vehicle, distribution vehicle with tailgate, fire brigade vehicle with an extendable ladder etc., which vehicle is equipped with a working hydraulics (AH) with the associated pumping set (P) for lifting, lowering, pressing etc operations, the pumping set (P) can be connected with the electric machine (4) via a clutch (KP).

7. Hybrid drive as under the Claims 1 and 2, characterised in that a system-integrated electronic operation control unit (59) is allocated which, by comparing measured actual values with stored set-point values/characteristic data by means of a program and in response to the driver's actuation of the accelerator pedal (41), brake pedal (46) and operation of other optional organs (58), controls the operation of the heat engine (1) and the electric machine (4)-the latter via a control system (37)-, and at least also the shifting of the clutch (KM) for semi-automatic operation and, if installed (KE), also the shifting of gears for fully automatic operation via electro-pneumatic and electro-hydraulic shifting organs, particularly in the sense that, in the low speed range, ie up to a preset speed limit, the electric machine (4) acts as motor alone or together with the heat engine (1).

## Revendications

1. Entraînement hybride pour véhicule comportant une ligne de transmission comprenant un moteur thermique (1), une boîte de vitesses à griffes, synchronisée (2) et entre-eux un embrayage (KM) ainsi qu'une machine électrique 4 travaillant en alternance ou en commun avec le moteur thermique (1) pour alimenter une batterie lorsqu'elle travaille en générateur, ou travaillant en moteur dont l'arbre (5) est relié par une transmission à l'arbre d'entrée (7) de la boîte de vitesses (2) au moins dans certaines plages de fonctionnement, entraînement caractérisé en ce que la ligne de transmission est une ligne de construction connue dans laquelle, entre le moteur thermique (1) et la boîte de vitesses (2), il n'y a directement que l'embrayage (KM) et la transmission entre la machine électrique (4), et l'arbre d'entraînement (7) de la boîte de vitesses (2) est réalisé par un pignon (9) interne à la boîte de vitesse et porté par l'arbre d'entrée (7), un pignon (23) porté par un arbre auxiliaire (22) de la boîte (2) et s'engrènant avec le précédent, ainsi qu'un autre pignon (32) porté par un axe (31) logé dans un boîtier (30) bridé extérieurement sur la boîte de vitesses (2) ainsi que par une ligne de transmission (33) raccordée à l'axe (31) et reliée à l'arbre (5) de la machine électrique.

2. Entraînement hybride selon la revendication 1, caractérisé par l'association de l'installation de régulation (37) qui régule le fonctionnement de la machine électrique (4) quant à l'arrêt et au démarrage, et au réglage de la vitesse de rotation pour le fonctionnement en moteur et celui en générateur ainsi que pour synchroniser la boîte de vitesse (2) pendant le passage des rapports de vitesse, et en fonction de consignes données par le conducteur par actionnement de la pédale d'accélérateur et la pédale de frein.

3. Entraînement hybride selon la revendication 1, caractérisé en ce que le pignon (9) porté par l'arbre d'entrée (7) de la boîte de vitesses (2) est utilisé de préférence pour le rapport de vitesses le plus haut, et peut être mis en oeuvre ou au repos par un embrayage à griffes, synchrone (10), commutable, avec un arbre de sortie (11) de la boîte de vitesse aligné partiellement sur l'arbre d'entrée (7), et l'arbre de sortie (11) porte chaque fois trois pignons tournant librement et appartenant aux autres rapports de vitesses y compris la marche arrière, ces pignons pouvant être également mis en service ou hors service avec l'arbre de sortie (11) par des embrayages à griffes, synchrones, commutables (10, 18, 19, 20), et chaque pignon (9, 12, 13, 14, 15, 16, 17) engrène respectivement le pignon (17) de la marche arrière (3) et, le cas échéant par un autre pignon réducteur (21), avec un pignon (23, 24, 25, 26, 27, 28, 29) correspondant à la réduction respective dans le rapport de vitesses donné, et porté par l'axe auxiliaire 22 parallèle de la boîte de vitesse (2).

4. Entraînement hybride selon la revendication 1, caractérisé en ce qu'au moins une partie des appareils auxiliaires (NA) du véhicule tels que le ventilateur, le compresseur d'air, les pompes hydrauliques ou analogues, sont entraînés par une ligne de transmission (36) sur l'axe (31) du pignon (32) en dehors de la boîte de vitesse (2), pour être entraînés par le moteur thermique (1) et/ou par la machine électrique (4).

5. Entraînement hybride selon la revendication 1, caractérisé en ce que, dans la ligne de transmission (33) entre la machine électrique (4) et la boîte de vitesse (2), on a un embrayage commutable (KE) et/ou un élément d'amortissement de torsion et/ou un embrayage limiteur de couple.

6. Entraînement hybride selon la revendication 1, caractérisé en ce que, dans son application à un véhicule tel qu'une benne à ordures, un camion à benne basculante, un camion de distribution avec plate-forme relevable, un véhicule de pompier à échelle télescopique, etc..., comprenant un circuit hydraulique (AH) avec un groupe de pompe (P) pour le levage, l'abaissement la compression ou analogue, le groupe de pompe (P) peut être relié à la machine électrique (4) par un embrayage commutable (KP).

7. Entraînement hybride selon les revendications 1 et 2, caractérisé par l'association d'une installation de commande de fonctionnement électronique, propre au système (59) qui, par programme avec comparaison entre les valeurs réelles saisies et les valeurs de consignes/données dans le champ caractéristique, en mémoire, et avec les consignes du conducteur actionnant la pédale d'accélérateur (41), la pédale de frein (46) ou réglant d'autres organes sélecteurs (58), régule le fonctionnement du moteur thermique (1) et de la machine électrique (4) -cette dernière par l'intermédiaire de l'installation de régulation (37)- pour un fonctionnement au moins partiellement automatique au moins par la commutation de l'embrayage (KM) - et dans la mesure où existe (KE) - pour le fonctionnement totalement automatique, et régule également la commutation des rapports par des organes de commutation électro-pneumatiques ou électro-hydrauliques, notamment de façon que la machine électrique (4) fonctionne dans la plage des vitesses faibles ou jusqu'à une limite de vitesse correspondante, prédéterminée, comme moteur seul ou en combinaison avec le moteur thermique (1).
